# EUROPEAN PATENT SPECIFICATION

(11) **EP 2 908 928 B1**
(45) Date of publication and mention of the grant of the patent: **23.05.2018**
(21) Application number: 13783152.5
(22) Date of filing: 08.10.2013
(51) Int. Cl.: B01D 53/22, B01D 53/34, B01D 53/92, F01N 5/02

(54) **METHOD AND SYSTEM FOR REMOVAL OF C02 FROM INTERNAL COMBUSTION EXHAUST GAS USING FACILITATED TRANSPORT MEMBRANES AND STEAM SWEEPING**
VERFAHREN UND VORRICHTUNG ZUR ENTFERNUNG VON C02 AUS VERBRENNUNGSGASEN MIT MEMBRANEN FÜR ERLEICHTERTEN TRANSPORT UND DAMPFREINIGUNG
PROCÉDÉ ET SYSTÈME DE RETRAIT DU CO2 D'UN GAZ D'ÉCHAPPEMENT DE COMBUSTION INTERNE AU MOYEN DE MEMBRANES DE TRANSPORT FACILITÉ ET D'UN ENTRAÎNEMENT À LA VAPEUR

(30) Priority: 17.10.2012 US 201261714933 P
(43) Date of publication of application: 26.08.2015
(73) Proprietor: Saudi Arabian Oil Company, Dhahran 31311 (SA)
(72) Inventor: HAMAD, Esam, Zaki, Dhahran 31311 (SA); BAHAMDAN, Ahmed, A., Dhahran 31311 (SA); HAMAD, Feras, Dhahran 31311 (SA); YAHAYA, Garba, Oloriegbe, Dhahran 31311 (SA); AL-SADAT, Wajdi Issam, Freeville, NY 13068 (US)
(74) Representative: Gervasi, Gemma
(86) International application number: PCT/US2013/063877
(87) International publication number: WO 2014/062422

(56) References cited:
- WO-A1-2012/100182
- WO-A1-2013/063052
- WO-A2-2008/096200
- US-A- 6 079 373
- US-A1- 2010 071 559

## Description

### RELATED APPLICATION

### FIELD OF THE INVENTION

This invention relates to methods for removing CO₂ from mixed gases, such as exhaust gases produced via internal combustion engines ("ICE") on board mobile transportation devices. The invention employs a facilitated transport membrane for removal of CO₂, and steam sweeping technology to facilitate removal of the CO₂ taken up by the membrane.

### BACKGROUND AND PRIOR ART

The control of CO₂ emissions is an issue of great concern to all, including producers of hydrocarbon or fossil fuels, and manufactures and users of devices which use these fuels. Of special concern is the production of CO₂ and its release to the environment by mobile sources, such as cars, trucks, buses, motorcycles, trains, airplanes, ships and so forth. As developing countries acquire more of such devices, and so-called developed nations acquire more, the concern with the impact of CO₂, CH₄ and other "greenhouse gases" can only grow.

Current approaches to capturing and storing CO₂ so as not to release it to the environment center around chemical absorption, using amine solutions. This approach, however, is far from acceptable as it is not environmentally benign, it is costly, and its "foot print" is relatively large. Separation and storage via the use of polymeric membranes is a possible approach to the problem which avoids those associated with the use of amine solutions. The issues with such an approach are not inconsiderable, however, as is now discussed.

High temperature environments place significant stress on polymeric membrane materials. While gas separation using polymeric membranes is well known, their use has been limited to lower temperature conditions, as a result of the degradation or inactivity of membranes at high temperatures. At high temperatures, membrane materials useful in separating CO₂ from gas mixtures (e.g., polyethylene oxide, or "PEO"), decompose, whether oxygen and/or water are present in the feed stream. (Contact with CO₂ or H₂O tends to accelerate membrane decomposition at the high temperatures involved in, e.g., operation of ICEs used with mobile devices).

While membrane materials are known which can withstand demanding environmental conditions, these are not satisfactory for separating CO₂ or other gases.

Currently, CO₂ selective membranes are chosen on the basis of solution diffusion or facilitated transport mechanisms. The former is more conventional, and suffers from the problem that, as selectivity for the gas increases, often its permeability decreases and vice versa.

Facilitated transport polymers show interesting gas separation properties, and perform better in harsh environments than do regular polymers. As defined herein, facilitated transport ("FT") polymers as used in the invention described herein being considered for CO₂ separation are glassy, hydrophilic, thermally stable and mechanically robust, with high compressive strength. Key to their structure is the incorporation of complexing agents or carriers which exhibit strong affinity for CO₂ or other gases, on the backbone or membrane matrix of the conventional polymer molecules. These complexing agents/carriers interact selectively and specifically with *e.g*., CO₂ that is present in a gas mixture, and thus enhance CO₂ separation of the membranes significantly. Exemplary of the types of polymers which can be modified to FT polymers are poly (vinyl alcohol) (PVA), sodium alginate (SA), poly (acrylic acid) PAA, chitosan (CS), poly (acrylic amide) (PAAm), poly (vinyl)amine (PVAm), polyvinyl acetate, polyvinylpyrrolidone, poly (phenylene oxide) (PPO), as well as blends and copolymers thereof. The complexing agents or carriers with strong affinity for CO₂ that can be incorporated onto backbone of the above polymers include mobile carriers such as chlorides, carbonates/bicarbonates, hydroxides, ethylenediamine, diethanolamine, poly (amidoamine) dendrimers, dicyanamide, triethylamine, N,N-dimethylaminopyridine, and combinations thereof; and fixed site carriers such as polyethyleneimine, polyallylamine, copolyimdes modified by various amines, and blends and copolymer thereof.

Membranes based upon these FT polymers can have dense (non-porous) or thin film composite (dense, thin layers of FT polymers, precipitated in a porous membrane) morphology. They can also be used in spiral wound or plate and frame formations, e.g., and the membranes may be in the form of bundled configurations of tubes and/or hollow fibers. The resulting membranes are used in methodologies to remove CO₂ from gas mixtures.

U.S. Patent Nos. 8,177,885; 8,025,715; and 7,694,020 all share common disclosure. These patents address separation of CO₂ from gaseous mixtures. A sweep gas, defined as "air, oxygen enriched air or oxygen" is used, rather than steam. Part of the CO₂ is separated by crossing a membrane to a retentate side, while another part is removed in a capture step.

The membranes employed in these patents are membranes which employ solution diffusion mechanisms, rather than facilitated transport.

U.S. Patent No. 6,767,527 to Asen, et al. discloses the use of hot steam, or mixes of steam and CO₂, as sweep gases to remove O₂ which crosses a membrane. The O₂ is removed from a CO₂ containing gas, thus leaving a product with a high CO₂ concentration, in contrast to the present invention.

U.S. Patent No. 5,525,143 to Morgan, et al. teaches the use of hollow membrane technology together with sweep gases, in order to remove water from gases. Again, membranes which operate via solution diffusion mechanisms are used. One would not use water vapor (steam), as a sweep gas, to remove water vapor.

U.S. Patent No. 4,761,164 to Pez, et al. teaches a membrane loaded with immobilized molten material. The material can undergo reversible reactions to remove CO₂ from N₂. Steam sweeping and ICEs are not disclosed.

Published U.S. Patent Application 2011/0239700 teaches cooling CO₂ containing mixtures, prior to passage across a transport membrane. Steam and water vapor are not described as sweep gases, nor are ICEs. WO2012/100182A1 teaches a carbon dioxide separation system from exhaust gases of an internal combustion engine by means of a membrane module which is selectively permeable to CO2. Steam produced by contacting water with hot exhaust gases is used as sweep gas.

The references discussed supra, are not seen to teach or to suggest the invention claimed in this application.

### SUMMARY OF THE INVENTION

The invention relates to methods for separating CO₂ from mixed gases, such as exhaust gas produced by an internal combustion engine which uses fossil fuels, on a mobile source. The exhaust gas passes one side of a membrane (referred to as the "feed" or "retentate" side) at appropriate temperature; pressure and flow rate conditions, such that CO₂ can pass, selectively through the membrane. Conditions to facilitate this (the chemical potential difference) may be created via various means, including creating a vacuum on the other side of the membrane (the permeate side), by increasing pressure on the exhaust gas on the feed, or retentate side, or via sweeping the permeate with a gas, such as steam. *See, e.g.,* U.S. Patent Publication No. 2008/0011161 to Finkenrath et al. showing steam sweep technology. Steam sweeping is preferred in the invention, although any single method, or combination thereof, may be used.

### BRIEF DESCRIPTION OF THE DRAWINGS

Figure 1 shows an embodiment of the invention using steam sweeping and polymers as described herein.
Figure 2 shows the results of a simulation -on wet basis- carried out using the invention, for a fixed feed pressure (1.5 atm) and under different permeate pressures as depicted by the ratio Pf/Pp (described herein).
Figure 3 shows the results of the simulation, after water has been knocked down from the permeate stream, under varying pressure ratios and a fixed feed pressure (1.5 atm).
Figure 4 depicts results of simulation to determine the appropriate area of membrane needed to secure desired amounts of separation.
Figure 5 presents results of a simulation on dry basis - i.e., after water has been knocked down - carried out under different steam sweep flow ratios, with respect to the dry product and a fixed feed pressure (1.5 atm) and permeate pressure (1.0 atm.).
Figure 6 shows the result of the simulation to determine the appropriate membrane area needed to secure the desired separation under steam sweep conditions.

### DETAILED DESCRIPTION OF PREFERRED EMBODIMENTS

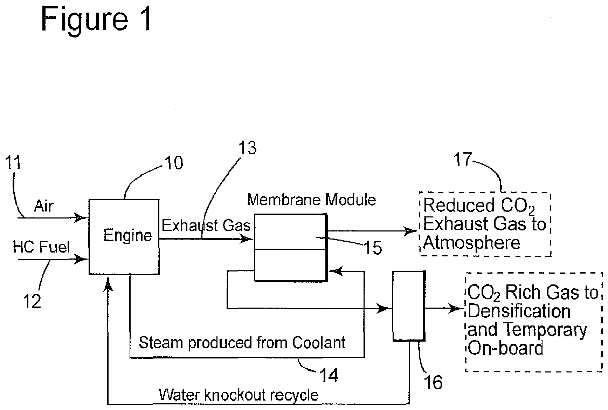

Referring now to Figure 1, an embodiment of the invention is shown.

An engine, such as an internal combustion engine "10" is provided with both an air stream containing oxygen "11," and a feed stream of a hydrocarbon fuel "12." In operation, the engine produces exhaust gas "13"(which is cooled down to a suitable temperature for proper operation of the membrane module.) Such a practice is standard in the art and also used to produce steam "14." Steam production is achieved by tapping into the heat available in the hot coolant fluid of the engine via use of a heat exchanger. The exhaust gas is channeled to one side of an FT membrane "15," which selectively removes CO₂ therefrom, while the steam produced is directed to the other side of the membrane, to remove the permeated gases. The steam and permeated gases stream leaving the membrane are directed to the knock down stage (16) where steam -water gas- is condensed and precipitated down by virtue of heat exchange, and is directed back to the engine (10) for steam production while the resultant CO₂-rich stream is directed to next stage for densification and storage. The CO₂ lean exhaust gas then escapes to the atmosphere "17." Separation of the CO₂, or other gas of interest, occurs when the exhaust gas is passed on one side of the membrane (the so-called "feed" or retentate side), at appropriate conditions of temperature, pressure and flow rate. The CO₂ or other gas permeates the membrane and passes to the other side (the so-called "permeate side"). Any required driving force necessary to facilitate this can be created as a result of, creating a vacuum on the permeate side, increasing pressure on the gas on the feed or retentate side, and/or, preferably, via sweeping the permeate with a gas, such as steam, at constant pressure.

Note that in operation, the exhaust gas and steam travel in opposite directions; however, the CO₂ enriched steam then moves to an appropriate point for further removal of the CO₂ or other action.

While not wishing to be bound by any theory, performance for separation of any two gases, *e.g.,* CO₂ and N₂, is governed by (i) the permeability coefficient, or "P_{A}," and the selectivity or separation factor, or α_{A/B}. The former is the product of gas flux and the thickness of the membrane divided by partial pressure difference across the membrane. The latter results from the ratios of gas permeability ("P_{A}/P_{B}"), where P_{A} is the permeability of the more permeable gas, and P_{B} that of the lesser. It is desirable to have both high permeability and selectivity, because a higher permeability decreases the size of membrane necessary to treat a given amount of gas, while higher selectivity results in a more highly purified product.

Operation of the invention will be seen in the examples which follow.

### EXAMPLES

The following examples detail a simulation of a facilitated transport membrane in combination with steam sweeping, for removing CO₂ from a mixed gas exhaust feed.

The exhaust gas composition was CO₂ (∼(13%), N₂ (∼74%), and H₂O (∼13%). This is representative of exhaust gas produced by combustion engines using hydrocarbon fuels.

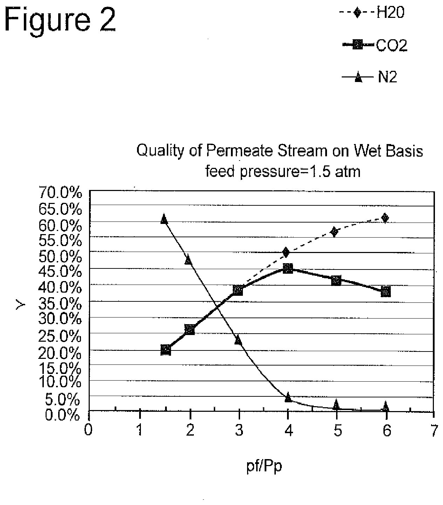

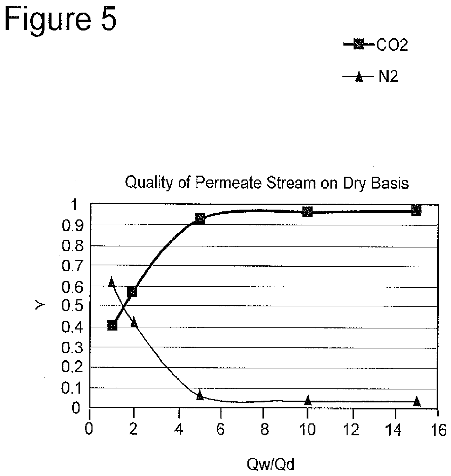

The simulation was set up for 30% recovery of CO₂ from a mixed gas, with a composition as described *supra,* and an exhaust gas flow rate of 28.9 gmol/min. Feed and permeate pressures of 1.5 atm and 1.0atm, respectively were used, and the results are shown in figure 5, where steam was used for the sweeping step. Figures 2-4, in contrast, present results with no sweep conditions and with different permeate pressures but a fixed feed pressure (1.5 atm).

The theoretical membrane of the simulation had a CO₂ permeability of 4000 Barrer (1 Barrer = 10-10 cm3 .(STP).cm.cm-2s-1 cm Hg-1), a CO2/N2 selectivity of about 400, and water permeability of 15000 Barrer. Two coating thicknesses, *i.e.,* 10.0 um and 1.0 um were tested.

Criteria evaluated included the effect of feed/permeate pressure ration (Pf/Pp) and, as noted, the coating thickness.

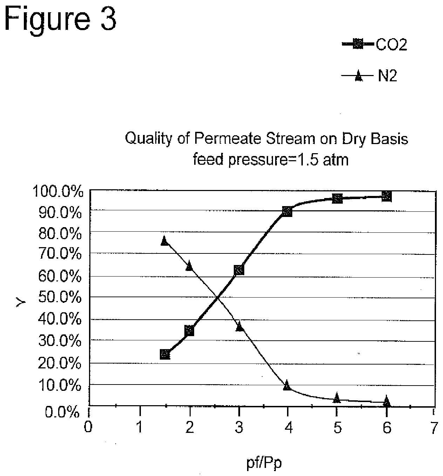

Figure 3 shows that high purity CO₂ (greater than 90%) can be obtained at a Pf/Pp ratio of 4 or greater. This experiment, however, did not use steam sweeping on the permeate side.

Figure 2 and 3 shows the very high permeability of water and CO2 mimics the effect of using sweep steam on the permeate side.

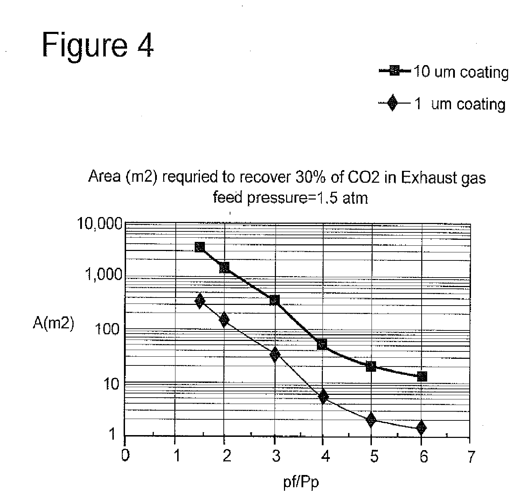

Figure 4 shows the area, in m², needed to recover 30% of CO₂ from exhaust gas, for the two different coating thicknesses discussed *supra.* The figure shows that there was a sharp reduction in the required membrane area as the ratio increases, and the membrane thickness decreases.

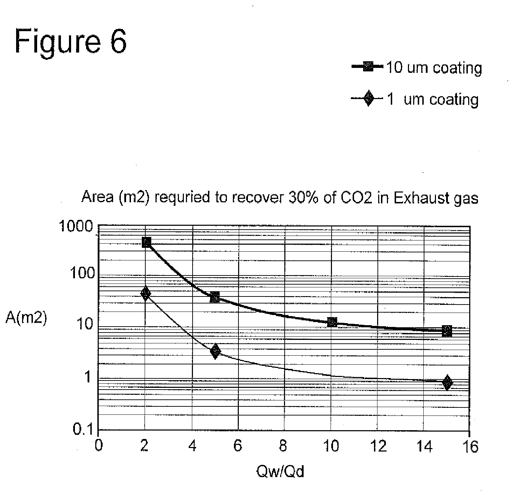

In follow-up experiments, a simulation was carried out testing a steam sweep flow rate/gas permeate flow rate ratio on separating CO₂ from the mixed gas described *supra.* The results are shown in Figures 5 and 6, with the ratio plotted as the X-axis (Qw/Qd). The exhaust gas flow rate, and the feed and permeate pressures were fixed at 1.5 and 1.0 atm.

In total, the results of the simulation shown that the theoretical, highly permeable facilitated transport membrane, when employed in the steam sweep methodology discussed herein, resulted in high CO₂ concentration (ranging up to 97% pure CO₂ Figures 5 when the sweep steam flow ratio with respect to the dry permeate is set at 4.5 or higher.

Figure 6 shows the area, in m², needed to recover 30% of CO₂ from exhaust gas, for the two different coating thicknesses discussed. The figure shows that there was a sharp reduction in the required membrane area as the sweep steam ratio increases, and the membrane thickness decreases.

Figure 4 and 6 shows that high permeability membranes are necessary in this methodology, as less membrane area was required for low membrane thickness and high permeability of the membrane.

The foregoing experiments set forth aspects of the invention, which is, *inter alia,* a method for removing a gas, CO₂ in particular, from a mixed gas stream, using a facilitated transport membrane in combination with pressure driven and steam sweep technologies. In practice, the mixed gas stream, such as exhaust gas from an internal combustion engine, follows a path along a first side of a facilitated transport membrane, where the membrane is specifically permeable to a specific gas, such as CO₂. For CO₂, the "FT" membrane preferably has a permeability for CO₂ of at least 1000 barrers.

The sweep fluid, steam, is provided via action of a cooling system on the source of the mixed gas, i.e. the internal combustion engine. The steam is directed along the side opposite the side on which the mixer gas stream passes, and in the opposite direction. CO₂ or some other gas moves into the sweep liquid and is carried away to, *e.g.,* a temporary storage unit for further processing.

Different conditions of pressure, membrane thickness, gas flow, and other factors may be employed with the invention remaining operative, as the figures show.

Other features of the invention will be clear to the skilled artisan and need not be reiterated here.

## Claims

1. A method for selectively removing carbon dioxide, CO₂, from an exhaust gas produced by an internal combustion engine, ICE, on a mobile device, said ICE being provided with coolant fluid, comprising:
(i) contacting said exhaust gas produced by said ICE to a first side of a facilitated transport, FT, membrane;
and
(ii) directing a stream of steam produced by contact of said coolant fluid with said ICE to remove CO₂ complexed to a polymer from a second side of said FT membrane, said FT membrane comprises a polymer having a complexing agent or carrier having affinity for CO₂ incorporated in said polymer.

2. The method of claim 1, wherein said mobile device is an automobile, a truck, a bus, a motorcycle, a train, an airplane, or a ship.

3. The method of claim 1, wherein said FT membrane has higher selectivity for CO₂ as compared to N₂.

4. The method of claim 1, wherein said membrane has dense homogeneous morphology.

5. The method of claim 1, wherein said membrane has thin film composite morphology.

6. The method of claim 1, further comprising storing said CO₂.

7. The method of claim 1, further comprising knockdown of water from the sweep and/or permeate gas stream mixture.

8. A carbon dioxide separation system comprising:
(i) an internal combustion engine;
(ii) a membrane module comprising a facilitated transfer membrane selectively permeable to CO₂;
(iii) a cooling means which contains a coolant and adapted to cool said internal combustion engine, wherein (i), (ii) and (iii) are positioned to provide;
(iv) a first flow path for directing exhaust gas produced by said internal combustion engine along a first side of said membrane module;
(v) a second flow path for directing steam, produced by action of cooling said internal combustion engine coolant, along a second side of said membrane module opposite said first side,
(vi) a housing means for containing (i) through (v), said FT membrane comprises a polymer having a complexing agent or carrier having affinity for CO₂ incorporated in said polymer.

9. The carbon dioxide separation system of claim 8, further comprising a storage means for said separated CO₂.

## Patentansprüche

1. Verfahren zur selektiven Entfernung von Kohlendioxid, CO₂, aus einem Abgas, das von einem Verbrennungsmotor, VM einer mobilen Vorrichtung erzeugt wird, wobei der VM mit einer Kühlflüssigkeit versehen ist, und das Verfahren aufweist:
(i) Kontaktieren des Abgases, das vom Verbrennungsmotor produziert wird, mit einer ersten Seite einer Membran mit erleichterten Transport, FT; und
(ii) Leiten eines Dampfstromes, der durch den Kontakt der Kühlflüssigkeit mit dem VM erzeugt wurde, zum Entfernen von CO₂, das an ein Polymer komplexiert ist, von der zweiten Seite der FT-Membran , wobei die FT-Membran ein Polymer mit einem Komplexbildner oder mit einer Trägersubstanz mit einer Affinität für das CO₂ aufweist, der/die in das Polymer eingebunden ist.

2. Verfahren gemäß Anspruch 1, wobei die mobile Vorrichtung ein Automobil, ein LKW, ein Bus, ein Motorrad, ein Zug, ein Flugzeug oder ein Schiff ist.

3. Verfahren gemäß Anspruch 1, wobei die FT-Membran eine höhere Selektivität für CO₂ als für N₂ aufweist.

4. Verfahren gemäß Anspruch 1, wobei die Membran eine kompakte, homogene Morphologie aufweist.

5. Verfahren gemäß Anspruch 1, wobei die Membran eine Dünnfilm-Komposite-Morphologie aufweist.

6. Verfahren gemäß Anspruch 1, weiter aufweisend eine Speicherung des CO₂.

7. Verfahren gemäß Anspruch 1, weiter aufweisend einen Wasser-Niederschlag vom Abgasstrom und / oder von der Permeat-Gasstrom-Mischung.

8. System zur Trennung von Kohlendioxid aufweisend:
(i) einen Verbrennungsmotor;
(ii) ein Membranmodul, aufweisend eine Membran mit erleichtertem Transport, die selektiv CO₂-durchlässig ist;
(iii) eine Kühlvorrichtung, die ein Kühlmittel enthält und geeignet ist, den Verbrennungsmotor zu kühlen, wobei (i), (ii) und (iii) positioniert sind, bereitzustellen;
(iv) einen ersten Strömungsweg, um das von dem Verbrennungsmotor erzeugte Abgas entlang einer ersten Seite des Membranmoduls zu leiten;
(v) einen zweiten Strömungsweg zum Leiten von Dampf, der durch Kühlen des Verbrennungsmotors erzeugt wird, entlang einer zweiten Seite des Membranmoduls, die der ersten Seite gegenüber liegt;
(vi) ein Gehäuse zur Unterbringung von (i) bis (v), wobei die FT-Membran ein Polymer mit einem Komplexbildner oder mit einer Trägersubstanz mit einer Affinität für das CO₂ aufweist, der/die in das Polymer eingebunden ist.

9. System zur Trennung von Kohlendioxid gemäß Anspruch 8, weiter aufweisend ein Lagerungsmittel für das abgeschiedene CO₂.

## Revendications

1. Procédé d'élimination sélective de dioxyde de carbone, CO₂, d'un gaz d'échappement produit par un moteur à combustion interne, ICE, sur un dispositif mobile, ledit ICE étant pourvu d'un liquide de refroidissement, comprenant :
(i) la mise en contact dudit gaz d'échappement produit par ledit ICE avec un premier côté d'une membrane à transport facilité, FT ;
et
(ii) la direction d'un flux de vapeur produit par un contact dudit liquide de refroidissement avec ledit ICE pour éliminer le CO₂ complexé en un polymère depuis un second côté de ladite membrane FT, ladite membrane FT comprend un polymère ayant un agent complexant ou un support ayant une affinité pour le CO₂ incorporé dans ledit polymère.

2. Procédé selon la revendication 1, dans lequel ledit dispositif mobile est une automobile, un camion, un bus, un motocycle, un train, un avion ou un navire.

3. Procédé selon la revendication 1, dans lequel ladite membrane FT a une sélectivité plus élevée pour le CO₂ en comparaison au N₂.

4. Procédé selon la revendication 1, dans lequel ladite membrane a une morphologie homogène dense.

5. Procédé selon la revendication 1, dans lequel ladite membrane a une morphologie composite de film mince.

6. Procédé selon la revendication 1, comprenant en outre le stockage dudit CO₂.

7. Procédé selon la revendication 1, comprenant en outre la séparation d'eau du gaz d'entraînement et/ou d'un mélange de flux de gaz de perméat.

8. Système de séparation de dioxyde de carbone comprenant :
(i) un moteur à combustion interne ;
(ii) un module de membrane comprenant une membrane à transfert facilité sélectivement perméable au CO₂ ;
(iii) un moyen de refroidissement qui contient un liquide de refroidissement et adapté pour refroidir ledit moteur à combustion interne, dans lequel (i), (ii) et (iii) sont positionnés pour fournir :
(iv) un premier chemin d'écoulement pour diriger le gaz d'échappement produit par ledit moteur à combustion interne le long d'un premier côté dudit module de membrane ;
(v) un second chemin d'écoulement pour diriger la vapeur, produite par l'action de refroidissement dudit liquide de refroidissement de moteur à combustion interne, le long d'un second côté dudit module de membrane opposé audit premier côté,
(vi) un moyen de logement pour contenir (i) à (v),
ladite membrane FT comprend un polymère ayant un agent complexant ou un support ayant une affinité pour le CO₂ incorporé dans ledit polymère.

9. Système de séparation de dioxyde de carbone selon la revendication 8, comprenant en outre un moyen de stockage pour ledit CO₂ séparé.
